# EUROPÄISCHE PATENTANMELDUNG

(11) **EP 1 063 162 A1**
(43) Veröffentlichungstag der Anmeldung: **27.12.2000**
(21) Anmeldenummer: 00109942.3
(22) Anmeldetag: 11.05.2000
(51) Int. Cl.: B62M 23/02

(54) **Antriebsvorrichtung für ein Fahrrad**

(30) Priorität: 24.06.1999 AT 110999
(71) Anmelder: Buchner, Johannes, 5400 Hallein (AT)
(72) Erfinder: Buchner, Johannes, 5400 Hallein (AT)

(57) **Zusammenfassung**

Eine Antriebsvorrichtung für ein Fahrrad mit einem mittels eines Halters an einem Fahrradrahmenrohr befestigbaren Elektromotor oder Getriebemotor (4) und einem Zahnriemen (7) zur Übertragung des Drehmoments auf eine an einem Fahrradrad (5, 6) befestigte Scheibe (10).
Die Scheibe (10) weist auf der von den Speichen abgewandten Seite einen oder mehrere radiale Vorsprünge (40) auf um den Riemen (7) vor dem Abspringen zu hindern. Die Scheibe (10) mit mittiger Öffnung ist radachsenmittig zentriert und an den Speichen des Fahrradrades befestigt.

## Beschreibung

Die Erfindung bezieht sich auf eine elektrische Antriebsvorrichtung für ein Fahrrad nach dem Oberbegriff des Anspruchs 1.
Derartige Vorrichtungen sind beispielsweise aus der Fr 875 752 und Fr 878 837 bekannt.
Dabei werden Verbrennungsmotoren verwendet.
Nachteilig ist bei diesen, dass diese während der Fahrt nicht nach Belieben ein- und ausgeschaltet werden können, da ein Verbrennungsmotor immer erst gestartet werden muss. Dies verursacht unnötigen Lärm und Spritverbrauch.
Auch ist bei einem plötzlichen Anhalten meist ein Abwürgen des Verbrennungsmotors die Folge.
Bei diesen Anmeldungen Kettenantriebe verwendet. Ein Kettenantrieb hat aber den Nachteil, dass er geschmiert werden muss und die verwendeten Teile sind aus Metall, welche erheblich schwerer sind als wenn sie zum Beispiel aus Kunststoff wären. Außerdem kann das kleine Antriebskettenrad nicht so klein ausgeführt werden wie z.B. das eines Zahnriemenrades.

Auch können diese bekannten Antriebe nicht ohne Probleme an allen gängigen Fahrrädern montiert werden.
Denn es kann die Anmeldung Fr 878.837 nicht an ein Damenrad montiert werden, da bei diesen das obere Querrohr im Weg wäre. Bei der bekannten Vorrichtung Fr 875.752 ist eine starke Änderung des Fahrverhaltens zu erwarten da die Schwerpunktlage weit nach hinten verschoben ist oder es besteht die Gefahr, wenn dieser Antrieb auf ein modernes, leichtes Fahrrad wie zum Beispiel ein Mountainbike montiert ist, dass nach dem Absteigen das Fahrrad sogleich nach hinten wegkippt.

Auch sind ähnliche Antriebe aus UK 2 164 615 A und US 4,267,898 bekannt.
Bei diesen sind aber die Antriebsriemenräder nicht an den Speichen des Fahrradrades befestigt was zur Folge hat, dass so eine Antriebsrad stabiler und dadurch auch schwerer gestaltet sein muss da es sich nicht an den Speichen abstützen kann. Außerdem ist deren Befestigung nur mit Hilfsteilen möglich.
Auch werden bei diesen Antrieben Keilriemen oder V- Riemen verwendet, die den Nachteil eines gewissen Riemenschlupfs haben, wobei dieser vor allem bei Nässe zu einem Problem werden kann.

Alle diese bekannten Vorrichtungen sind sehr schwer und groß und deshalb auch teurer als wenn sie klein und einfacher gestaltet wären.

Zweck dieser Erfindung ist es, einen äußerst einfachen, leichten, umweltfreundlichen und preiswerten Zusatzantrieb für alle gängigen Fahrräder zu schaffen. Zudem soll die Übertragung des Drehmomentes aufs Fahrradrad schlupffrei und wartungsfrei sein und sich das Fahrverhalten nicht merkbar verschlechtern.

Grundvoraussetzung dafür ist die erfindungsgemäß durch die im Anspruch 1 gekennzeichnete Antriebsvorrichtung. In den Unteransprüchen sind vorteilhafte Ausführungen der erfindungsgemäßen Antriebsvorrichtung wiedergegeben.

Erfindungsgemäß wird nach meiner Anmeldung ein Zahnriemen benutzt. Bei diesem kann das Antriebszahnrad wesentlich kleiner ausgebildet werden als bei einem Kettenantriebszahnrad. Damit ist eine entsprechend größere Untersetzung bei meiner Vorrichtung möglich. Dies hat zur Folge, dass ein äußerst kleiner, leichter und preiswerter Elektromotor eingesetzt werden kann, vorzugsweise einer mit angeflanschtem Planetengetriebe. Ein solcher Motor ist zum Beispiel von modernen Akku-Bohrmaschinen bekannt. Dieser sehr kleine Getriebemotor kann nun aber direkt mittels eines einfachen Klemmhalters an verschiedenen Stellen am Fahrradrahmen, zum Beispiel an der Stützgabel, ohne zu stören, befestigt werden.
Die Vorrichtung kann dabei zum Antrieb des Vorderrades und /oder des Hinterrades des Fahrradrades ausgebildet sein.
Bei Verwendung einer großen Antriebsscheibe sind die auftretenden Kräfte wie z. B. die Riemenzugkraft äußerst gering, so dass die Befestigungsteile für den Motor äußerst klein und leicht dimensioniert sein können.
Zudem kann als Antriebsscheibe eine äußerst preiswerte Kunststoffscheibe verwendet werden, die auch, wenn sie für eine größere Untersetzung entsprechend groß dimensioniert ist, nur wenig wiegt.
Da die Scheibe am Riemen- Auflagering innen direkt an den Speichen befestigt ist, wird so nicht nur das Drehmoment aufs Fahrradrad übertragen sondern zusätzlich auch noch die Scheibe durch die Speichen gestützt.
Auch hindern die Speichen den Zahnriemen innen vor dem Abspringen.

Diese Antriebsscheibe mit ziemlich großem Durchmesser wird einfach durch Aufsetzen auf das Fahrradrad radachsmittig zentriert.
Dies ist bei Fahrradrädern mit äußerem Nabenbund durch Umgreifung der mittigen Öffnung der Scheibe kein Problem.
Bei den meisten neuen Fahrradräder fehlt aber dieser äußere Bund. Deshalb ist für solche die Antriebsscheibe mit zentrisch um die Mitte angebrachten Zentrierzapfen versehen, welche zwischen die Speichen ragen und am äußeren Umfang des Nabenflansches anliegen.

Auch ist die Antriebsscheibe an ihrem äußeren Umfang außen mit einem Bund versehen um den Riemen vor dem abspringen zu hindern, welches vor allem beim Radfahren durch Stöße leicht möglich ist.

Mit nur einem Bund ist die Scheibe aber mittels einem sehr einfach gebauten Spritzgusswerkzeug mit rundum verzahnter Auflagefläche für den Riemen herzustellen.
Durch diese Vorrichtung ist eine äußerst preiswerte schlupffreie große Untersetzung auf das Antriebsrad möglich.

Vorzugsweise werden zum Anbinden der Scheibe an die Speichen Kabelbinder verwendet. Die Scheibe kann damit auch von Laien in kürzester Zeit angebracht werden.
Zum Anbinden der Scheibe, beispielsweise mit Kabelbindern, kann ein zentrischer Kranz von Öffnungen verschiedener Konturen vorgesehen sein, die entsprechend den Speichen des Rades so angeordnet sind, daß die Kabelbinder jeweils durch zwei Öffnungen hindurch geführt werden, um die dazwischen liegenden Speichen zu umschlingen.

Auch ist Zweck der Erfindung, dass der übliche Kettenantrieb mit Naben- oder Kettenwerfer- Schaltung nicht beeinträchtigt wird und der Antrieb nach Lust und Laune durch Körperkraft und / oder Elektroantrieb bei minimalsten Reibverlusten erfolgt.

Dazu ist zwischen der Antriebswelle des Motors oder Getriebemotors und dem darauf gelagert laufenden Antriebsrad ein Hülsenfreilauf vorgesehen. Dadurch werden die Antriebswelle und das Antriebsrad durch Klemmen drehfest miteinander verbunden, wenn der Motor antreibt. Der Freilauf dreht jedoch frei durch, wenn nicht angetrieben wird.

Um den Riemen problemlos und schnell spannen oder lockern zu können ist bei der Befestigung des Getriebemotors oder Elektromotors ein an einem Fahrradrahmenrohr befestigbarer Halter mit einer Aufnahmebohrunq vorgesehen in welcher ein zur Antriebswelle des Motors oder Getriebemotors exzentrisch angebrachter hervorstehender Gewindezapfen eingreift und mit einer Gewindemutter angeschraubt ist. Nach Lockern der Mutter und Verdrehung des Motors oder des Getriebemotors um seine Achse kann der Riemen gespannt oder gelockert werden. Durch diese Befestigung ist auch das Spannen des Riemens nach einem Reifenwechsel äußerst einfach.

Um jegliche Reibung bei der Drehmomentübertragung durch den Riemen auszuschließen ist der Riemen vom Antriebsrad abhebbar. Um den gelösten Zahnriemen auf der Scheibe am Fahrradrad zu fixieren, weist die Scheibe vorzugsweise zwischen die Speichen ragende Einhängezapfen auf, auf die der Zahnriemen durch Bildung einer Schlaufe aufgespannt wird. Durch diese Möglichkeit wird der Reibverlust auf null reduziert und ein Reifenwechsel ist so problemlos wie ohne Zusatzantrieb möglich.
Es kann so die Drehmomentübertragung zum angetriebenen Fahrradrad schnell und ohne großen Aufwand eingerichtet und wieder entfernt werden.

Nachstehend ist eine Ausführungsform der erfindungsgemäßen Fahrradantriebsvorrichtung anhand der Zeichnung beispielhaft näher erläutert. Darin zeigen:
- **Figur 1**: eine teilweise Seitenansicht eines Fahrrades;
- **Figur 2**: eine Ansicht in Achsrichtung gemäß Pfeil A in Fig. 1;
- **Figur 3**: eine Seitenansicht des Motors mit Planetengetriebe;
- **Figur 4**: eine Ansicht der Vorderseite des Planetengetriebes mit exzentrischen Gewindezapfen und Antriebswelle;
- **Figur 5**: einen Schnitt durch das Zahnriemenantriebsrad auf der Antriebswelle des Planetengetriebes;
- **Figur 6**: eine perspektivische Ansicht des Halters mit Schelle;
- **Figur 7**: eine perspektivische Ansicht der auf den exzentrischen Gewindezapfen aufschraubbaren Rändelmutter;
- **Figur 8**: eine Ansicht eines angetriebenen Fahrradrades, wobei der Zahnriemen das Riemenantriebsrad umschlingt bzw. vom Riemenantriebsrad abgenommen ist;
- **Figur 9**: eine Schnittdarstellung von Figur 8 mit von dem Zahnriemen umschlauften Einhängezapfen.

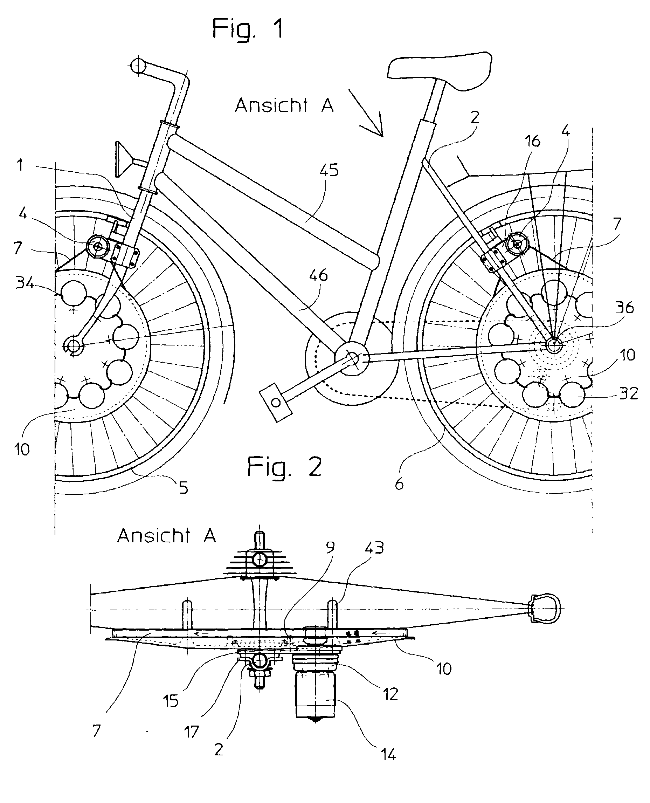

Gemäß Figur 1 ist an einer Seite der Vorderradgabel 1 und der Stützgabel 2 oder einem anderen Rahmenrohr des Fahrrades ein Getriebemotor 4 oder ein nicht gezeigter Elektromotor zum Antrieb des Vorderrades 5 und /oder des Hinterrades 6 befestigt.

Der oder die Getriebemotoren 4 oder die nicht gezeigten Elektromotoren übertragen ihr Drehmoment jeweils mit einen Zahnriemen 7 auf die Scheibe 10 am Vorderrad 5 und/oder aufs Hinterrad 6.

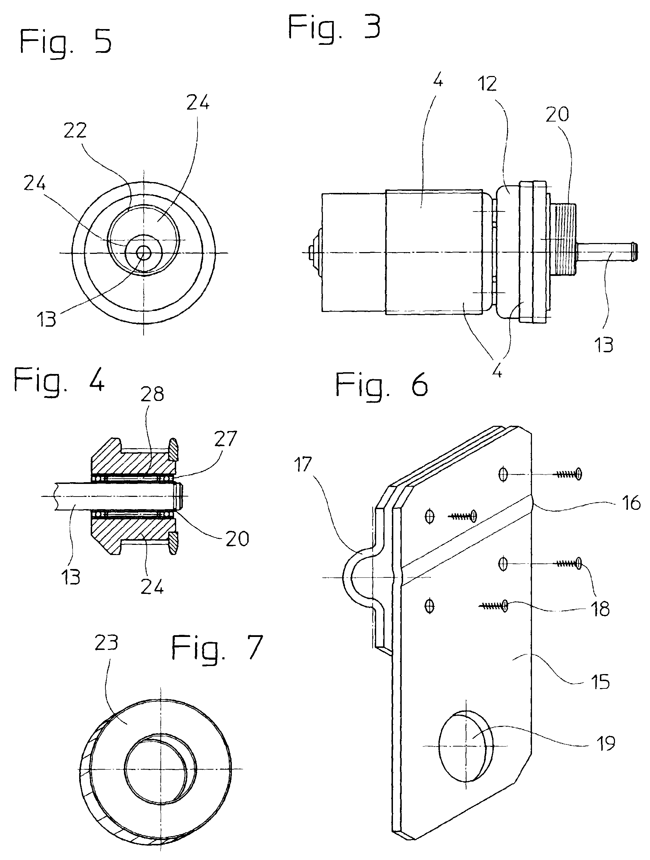

Da die elektrischen Antriebsvorrichtungen für das Vorderrad 5 und das Hinterrad 6 im wesentlichen gleich ausgebildet sind, wird nachstehend nur die Antriebsvorrichtung für das Hinterrad 6 näher beschrieben.
Gemäß Figur 3 ist der Elektromotor 14 am Planetengetriebe 12 fest angebracht, welches mit der Antriebswelle 13 versehen ist. Der so entstandene Getriebemotor 4 ist mit einem Halter 15 an der einen Seite des Fahrrades an der Stützgabel 2 befestigt.

Gemäß Figur 6 ist der Halter 15, der vorzugsweise aus Metall besteht, als rechteckähnlicher gebogener Blechstreifen ausgebildet, der eine Sicke 16 aufweist. Zusammen mit einer zur Sicke 16 parallel angeordneten Halteschelle 17 mit halbkreisförmiger Biegung umgreift der Halter 15 das Stützgabelrohr 2 (Figur 2). Mit Schrauben 18, die den Halter 15 und die Schelle 17 verbinden, wird der Halter 15 an dem Stützgabelrohr 2 festgeklemmt. An dem von der Schelle 17 bzw. dem Stützgabelrohr 2 abgewandten Ende weist der Halter 15 eine Aufnahmebohrung 19 auf, in die ein exzentrischer Gewindezapfen 20 eingreift, der an der vom Motor oder Getriebemotor 4 abgewandten Stirnseite des Planetengetriebes 12 oder des Motors angeformt ist. Der Gewindezapfen 20 ist zur Abtriebswelle 13 des Planetengetriebes 12 oder des nicht gezeigten
Motors exzentrisch angeordnet (Figur 5).
Zur Befestigung des Getriebemotors am Halter 15 wird er mit den Gewindezapfen 20 durch die Aufnahmebohrung 19 des Halters 15 gesteckt und mit einer beispielsweise als Rändelmutter ausgebildeten Mutter 23 (Figur 7),angeschraubt.

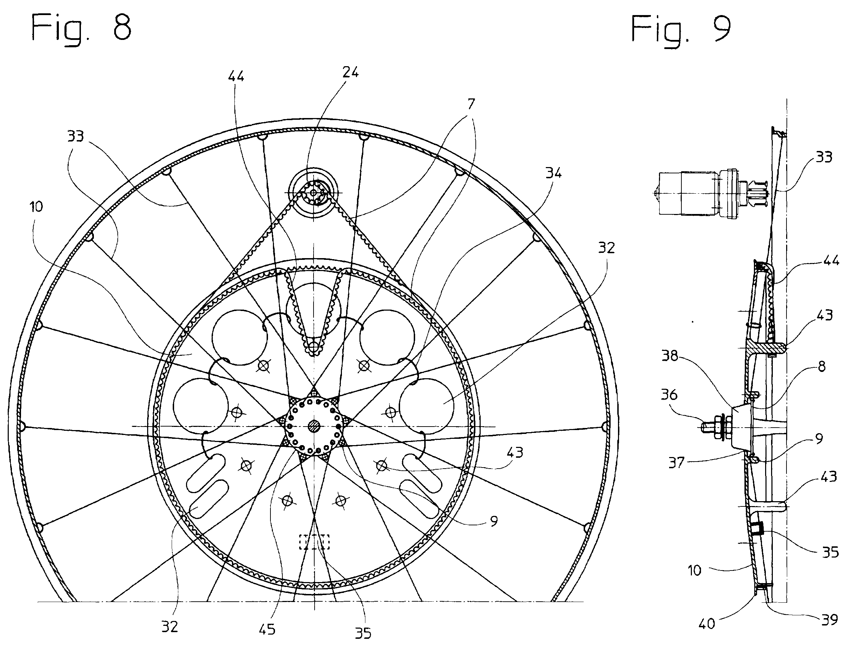

Der Zahnriemen 7 wird von einem Zahnriemenrad 24 angetrieben, welches auf der Antriebswelle 13 des Planetengetriebes oder des nicht gezeigten Motors mit Wälzlagern 27 drehbar gelagert ist, zwischen denen ein Hülsenfreilauf 28 fest eingepresst ist, welcher beim Antrieb die Antriebswelle 13 klemmt.
Durch den Sprengring 20 wird das Zahnriemenrad 24 auf der Welle 13 axial gehalten.
Die Scheibe 10 ist am Hinterrad 6 befestigt. Wie insbesondere aus den Figuren 8 und 9 ersichtlich, weist die Scheibe 10 dazu einen Kranz von Öffnungen 32 auf, die um die Radachse 36 herum angeordnet und verteilt sind, sodass sich Stege zwischen den Öffnungen 32 befinden. Durch Kabelbinder 34, die jeweils zwischen zwei Öffnungen 32 gesteckt werden und damit diesen Steg und die dazwischen liegende Speiche oder Speichen umschlingen, wird die Scheibe 10 am Hinterrad 6 befestigt.
Wie in Figuren 8 und 9 jeweils unten angedeutet, können anstatt der Kabelbinder 34 beispielsweise auch andere Befestigungsmittel 35 die Scheibe 10 an den Speichen befestigen.
Vorteilhaft können auch Schlitze zur Durchführung der Speichen am verlängerten Riemen- Auflagering 39 radseitig angebracht sein.

Zur Zentrierung auf der Radnabe 38 ist die Scheibe 10 mit Zentrierzapfen 9 versehen, die um die Radachse 36 angeordnet sind, welche auf den Speichenflansch 8 der Radnabe 38 aufliegen, und/oder sie ist mit einer mittigen Öffnung 37 versehen, mit der sie zum Beispiel auf die Radnabe 38 (Figur 9) gesteckt wird.

Die vorzugsweise aus Kunststoff bestehende Scheibe 10 weist auf der von den Speichen 33 abgewandten Seite ihres Riemen-Auflageringes 39 einen Bund 40 auf; zwischen dem Bund 40 und den Speichen 33 läuft der Zahnriemen 7.
Die Scheibe 10, vorzugsweise verzahnt ausgeführt, weist einen wesentlich größeren Durchmesser als das Antriebszahnriemenrad 24 auf.

Um jegliche Drehmomentübertragung von dem Antriebsrad 24 auf das Fahrradrad 6 über den Riemen 7 zu unterbinden, kann dieser von dem Antriebsrad 24 abgenommen werden. Dazu wird die Gewindemutter 23 gelockert und der Motor oder Getriebemotor 4 um seine Achse gedreht sodass durch dessen exzentrischen Gewindezapfen 20 der Abstand der Welle 13 zu der Scheibe 10 verringert wird.

Der Zahnriemen 7 kann so gelockert vom Antriebsrad 24 abgenommen werden. Anschließend kann die Mutter 23 wieder angezogen werden, oder der Getriebemotor 4 oder Motor wird überhaupt abgenommen.

Um den so vom Antriebsrad 24 abgenommenen Zahnriemen 7 an der Scheibe 10 zu befestigen, sind an deren Innenseite durch die Speichen 33 ragende Einhängezapfen 43 vorgesehen, auf die der gelöste Zahnriemen 7 durch Bildung einer Schlaufe 44 übergespannt wird, und zwar nach innen zwischen zwei Speichen 33 hindurch in Richtung Achse 36.

Die nicht dargestellte Akkubox zur Stromversorgung der Elektromotoren 14 kann z.B. zwischen den Rahmenrohren 45 und 46 angeordnet sein.
Der Elektromotor 14 kann beim einem Getriebemotor ein handelsüblicher, zweckmäßigerweise bürstenloser Motor sein, wie er z.B. vom Modellbau her bekannt ist mit einer hohen Arbeitsdrehzahl und gutem Wirkungsgrad von bis zu 92%.
Ohne Getriebe ist ein Motor mit wesentlich niedrigerer Drehzahl erforderlich.

## Patentansprüche

1. Antriebsvorrichtung für ein Fahrrad mit einem mittels eines Halters an einem Fahrradrahmenrohr befestigbaren Motor und einem Zugmittel zur Übertragung des Drehmoments auf eine Scheibe, die mit mittiger Öffnung radachsenmittig zentriert und an den Speichen des Fahrradrades befestigt ist, dadurch gekennzeichnet, daß das Zugmittel durch einen Zahnriemen (7) gebildet ist, die Scheibe (10) auf der von den Speichen (33) abgewandten Seite einen oder mehrere radiale Vorsprünge (40) aufweist, um den Riemen (7) vor dem Abspringen zu hindern und der Motor ein Elektromotor (4) ist.

2. Vorrichtung nach Anspruch 1, dadurch gekennzeichnet, dass der Halter (15) zur Befestigung des Motors oder des Getriebemotors (4) eine Aufnahmebohrung (19) aufweist in welche ein zur Antriebswelle (13) des Motors oder des Getriebemotors (4) exzentrisches Befestigungsteil eingreift, um durch dessen Verdrehung (4) den Riemen (7) zu spannen oder zu lockern.

3. Vorrichtung nach Anspruch 1 oder 2, dadurch gekennzeichnet, dass zwischen der Antriebswelle (13) des Motors (4) und dem sich darauf frei drehend gelagerten Antriebsrad (24) ein Freilauf (28) vorgesehen ist.

4. Antriebsvorrichtung nach Anspruch 1, dadurch gekennzeichnet, dass der Elektromotor (4) ein Getriebemotor ist.

5. Antriebsvorrichtung nach Anspruch 1, dadurch gekennzeichnet, dass die Scheibe (10) mittels um ihre Mitte zentrisch angebrachten axialen Erhebungen (9) auf der Radnabe zentriert wird.

6. Vorrichtung nach einem der Ansprüche 1, dadurch gekennzeichnet, dass der radiale Vorsprung als Bund ausgebildet ist.

7. Vorrichtung nach Anspruch 2, dadurch gekennzeichnet, dass das exzentrische Befestigungsteil
als Gewindemutter (23) oder als Gewindezapfen (20) ausgebildet ist und damit an dem Halter (15) anschraubbar ist.

8. Vorrichtung nach Anspruch 4, dadurch gekennzeichnet, dass das Getriebe des Getriebemotors (4) aus einem Planetengetriebe (12) besteht.

9. Vorrichtung nach Anspruch 1, dadurch gekennzeichnet, dass die Scheibe (10) mit durch die Speichen (33) ragenden Einhängezapfen (43) versehen ist, auf die der von dem Antriebsrad (24) gelöste Zahnriemen (7) durch Bildung einer Schlaufe (44) aufgespannt werden kann.

10. Vorrichtung nach Anspruch 1, dadurch gekennzeichnet, dass die Scheibe (10) mit Ausnehmungen (32) versehen ist, durch die Kabelbinder (34) hindurch um eine oder mehrere Speichen (33) des Rades (5, 6) geführt werden, um die Scheibe (10) an die Speichen (33) anzubinden.
